# EUROPEAN PATENT APPLICATION

(11) **EP 2 547 105 A1**
(43) Date of publication of application: **16.01.2013**
(21) Application number: 11858681.7
(22) Date of filing: 16.12.2011
(51) Int. Cl.: H04N 7/18, H04L 29/08

(54) **VIDEO MONITORING METHOD AND SYSTEM BASED ON INTERACTIVE VOICE RESPONSE (IVR) TECHNOLOGY**

(30) Priority: 17.02.2011 CN 201110040191
(71) Applicant: Huawei Technologies Co., Ltd., Shenzhen, Guangdong 518129 (CN)
(72) Inventor: JIA, Yuying, Shenzhen Guangdong 518129 (CN)
(74) Representative: Thun, Clemens
(86) International application number: PCT/CN2011/084130
(87) International publication number: WO 2012/109940

(57) **Abstract**

A method and a system for video surveillance based on an interactive voice response IVR technology are provided. The method includes: receiving, by a video IVR system, a video call request sent by a video terminal, where the video call request includes an identifier of the video terminal and a video call service code; querying, by the video IVR system, according to the identifier of the video terminal and the video call service code, a video surveillance system for a surveillance device list which corresponds to the video terminal; receiving, by the video IVR system, the surveillance device list which corresponds to the video terminal and is returned by the video surveillance system, and providing the surveillance device list for the video terminal; and obtaining, by the video IVR system, according to selection for the surveillance device by the video terminal, a media stream surveilled by the selected surveillance device from the video surveillance system, and providing the media stream for the video terminal for playing.

## Description

This application claims priority to Chinese Patent Application No. 201110040191.0, filed with the Chinese Patent Office on February 17, 2011 and entitled "METHOD AND SYSTEM FOR VIDEO SURVEILLANCE BASED ON INTERACTIVE VOICE RESPONSE IVR TECHNOLOGY", which is incorporated herein by reference in its entirety.

### FIELD OF THE INVENTION

The present invention relates to the field of a video surveillance technology, and in particular, to a method and a system for video surveillance based on an interactive voice response IVR technology.

### BACKGROUND OF THE INVENTION

With the economic development and improvement of living standards, security requirements increase rapidly, and acceleration of transformation of social economy in China also highlights the security problem. A video surveillance system obtains a good developing opportunity.

A conventional video surveillance system is implemented based on a data domain, and a user needs to install specific client software on a PC or a mobile terminal to access a video surveillance platform. Therefore, a terminal device, the user, and use environment need to meet relatively high requirements.

### SUMMARY OF THE INVENTION

The objective of embodiments of the present invention is to provide a method and a system for video surveillance, and solve a problem in the prior art that the video surveillance can only be implemented in a data domain, and specific client software needs to be installed.

In one aspect, an embodiment of the present invention provides a video surveillance method based on an interactive voice response IVR technology, where the method includes: receiving, by a video IVR system, a video call request sent by a video terminal, where the video call request includes an identifier of the video terminal and a video call service code; querying, by the video IVR system, according to the identifier of the video terminal and the video call service code, a video surveillance system for a surveillance device list which corresponds to the video terminal; receiving, by the video IVR system, the surveillance device list which corresponds to the video terminal and is returned by the video surveillance system, and providing the surveillance device list for the video terminal; and obtaining, by the video IVR system, according to selection for the surveillance device by the video terminal, a media stream surveilled by the selected surveillance device from the video surveillance system, and providing the media stream for the video terminal for playing.

In another aspect, an embodiment of the present invention further provides a video IVR system, where the video IVR system includes: a first receiving apparatus, configured to receive a video call request sent by a video terminal, where the video call request includes an identifier of the video terminal and a video surveillance service code; a first sending apparatus, configured to query, according to the identifier of the video terminal, a video surveillance system for a surveillance device list which corresponds to the video terminal; a second receiving apparatus, configured to receive the surveillance device list which corresponds to the video terminal and is returned by the video surveillance system, and provide the surveillance device list for the video terminal; and a second sending apparatus, configured to obtain, according to selection for the surveillance device by the video terminal, a media stream surveilled by the selected surveillance device from the video surveillance system, and provide the media stream for the video terminal for playing.

In another aspect, an embodiment of the present invention further provides a video surveillance system, where the video surveillance system includes: a query processing apparatus, configured to receive a surveillance device query request which is from a video terminal and is sent by a video IVR system, where a surveillance device list which corresponds to the video terminal is returned to the video terminal via the video IVR system; and a media stream processing device, configured to transmit, according to selection for a surveillance device by the video terminal, a media stream surveilled by the selected surveillance device to the video terminal via the video IVR system.

In another aspect, an embodiment of the present invention further provides a video surveillance system based on an interactive voice response IVR technology, where the system includes: the video IVR system according to the foregoing embodiment, and the video surveillance system which communicates with the video IVR system and is according to the foregoing embodiment.

A beneficial effect of the present invention lies in that, through a combination of the video IVR technology and a video surveillance technology, an interconnection between a video IVR platform and a video surveillance platform are implemented, thereby enriching access manners of the video surveillance system. Through the present invention, a user holding a visual terminal may simply dial a service access code to implement surveillance video browse and pan/tilt/zoom control, which meets needs of a client for video checking and surveillance management whenever and wherever possible, reduces requirements on a terminal device, the user, and use environment, and further expands a user group of the video surveillance system.

### BRIEF DESCRIPTION OF THE DRAWINGS

FIG. 1 is an architectural diagram of a video surveillance system based on an interactive voice response IVR technology according to an embodiment of the present invention;

FIG. 1a is a block diagram of functions of a video IVR system 10 according to an embodiment of the present invention;

FIG. 1b is a block diagram of functions of a video surveillance system 30 according to an embodiment of the present invention;

FIG. 2 is a whole service flow chart of a video surveillance method based on an interactive voice response IVR technology according to an embodiment of the present invention;

FIG. 3 is a practical service flow chart of a video surveillance method based on an interactive voice response IVR technology according to an embodiment of the present invention;

FIG. 4 is a service flow chart of pan/tilt/zoom control according to an embodiment of the present invention; and

FIG. 5 is a service flow chart of an alarm method according to an embodiment of the present invention.

### DETAILED DESCRIPTION OF THE EMBODIMENTS

To make the objectives, technical solutions, and advantages of the embodiments of the present invention clearer, the technical solutions in the embodiments of the present invention are clearly and completely described in the following with reference to the accompanying drawings in the embodiments of the present invention. Apparently, the embodiments in the following description are merely a part rather than all of the embodiments of the present invention. All other embodiments obtained by persons of ordinary skill in the art based on the embodiments of the present invention without making creative efforts shall fall within the protection scope of the present invention.

A video IVR (interactive voice response, interactive voice response) service is one of main services promoted by a carrier in 3G times. A video IVR technology is an extension of an original voice IVR technology, and provides a value-added service integrating audio and video for a 3G video terminal user on the basis of a circuit domain 3G-324M video call. In the embodiments of the present invention, through a combination of a video IVR technology and a video surveillance technology, a user may use a video surveillance system whenever and wherever possible in a manner of dialing a service access code and following video and voice prompts, which reduces requirements on a terminal device, the user, and use environment, and further expands a user group of the video surveillance system.

### Embodiment 1

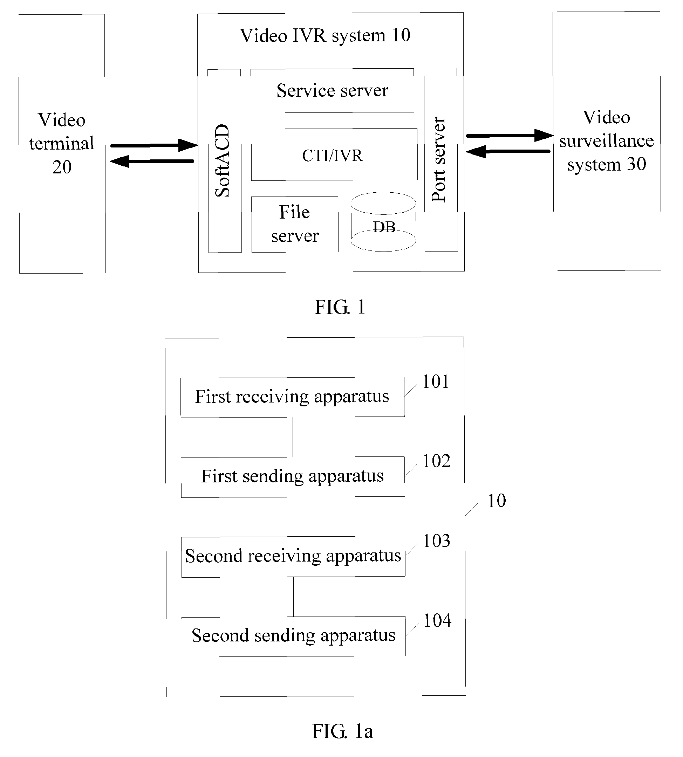

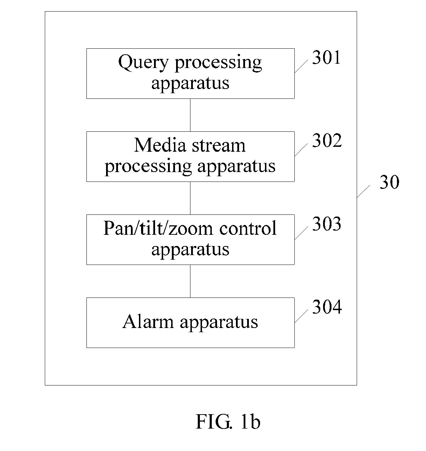

This embodiment provides a video surveillance system based on an interactive voice response IVR technology. FIG. 1 is an architectural diagram of the video surveillance system based on the interactive voice response IVR technology of this embodiment. As shown in FIG. 1, the system includes: a video IVR system 10, and a video surveillance system 30 which is connected to the video IVR system 10. In addition, the system further includes a video terminal 20.

The video IVR system 10 of this embodiment may be a value-added platform providing a service integrating audio and video for a 3G video terminal user based on a circuit domain 3G-324M video call of WCDMA. The system receives a video call of a forward user circuit domain, and may request a video stream and pan/tilt/zoom control from the video surveillance system. In a video surveillance application, the pan/tilt/zoom control represents full-sphere (up and down/left and right) movements of a pan-tilt and lens zooming, and focusing control. By controlling the pan-tilt, focusing of lens, change of an aperture, turning of the pan-tilt, adjustment of the turning speed of the pan-tilt may be implemented. The video surveillance system 30 of this embodiment may be in charge of maintenance and management of information, such as of a user (for example, an industry user) or of a front end device, and provide a surveillance video stream and a pan/tilt/zoom control interface for the video IVR system.

Specifically, the video IVR system 10 of this embodiment is configured to receive a video call request sent by the video terminal, where the video call request includes an identifier of the video terminal and a video surveillance service code; and query, according to the identifier of the video terminal, the video surveillance system for a surveillance device list which corresponds to the video terminal.

The video surveillance system 30 is configured to return the surveillance device list which corresponds to the video terminal 20 to the video terminal 20 via the video IVR system 10, and transmit, according to selection for the surveillance device by the video terminal 20, a media stream surveilled by the selected surveillance device to the video terminal 20.

The video terminal 20 is configured to initiate a video call request to the video IVR system 10 according to a video surveillance service access code input by a user, receive the surveillance device list returned by the video surveillance system 30 via the video IVR system 10, select a device that needs to be surveilled, send a selection result to the video surveillance system 30 via the video IVR system 10, and receive and play the media stream returned by the video surveillance system 30.

Optionally, the video IVR system 10 of the embodiment is further configured to request, according to the identifier of the video terminal 20, a client list which corresponds to the video terminal 20 from the video surveillance system 30, receive a specific client selected by the video terminal 20, and request the surveillance device list which corresponds to the specific client from the video surveillance system 30. The video surveillance system 30 of the embodiment is further configured to return the client list to the video terminal 20 via the video IVR system 10.

Optionally, the video terminal 20 of this embodiment is further configured to send a pan/tilt/zoom control request to the video IVR system 10 according to a pan/tilt/zoom control operation of the user. The video IVR system 10 of this embodiment is further configured to receive the pan/tilt/zoom control request of the video terminal, parse the pan/tilt/zoom control request to obtain a user operation type, and notify that the video surveillance system 30 performs pan/tilt/zoom control on a corresponding surveillance device.

Optionally, the video surveillance system 30 of this embodiment is further configured to report an alarm event to the video IVR system 10 when the alarm event is detected. The video IVR system 10 of the embodiment is further configured to notify the corresponding video terminal 20 of the alarm event via at least one manner of a video call, a voice call or a short message.

FIG. 1a is a block diagram of functions of the video IVR system 10 of this embodiment. As shown in FIG. 1a, the video IVR system 10 includes: a first receiving apparatus 101, configured to receive a video call request sent by the video terminal, where the video call request includes an identifier of the video terminal and a video surveillance service code; a first sending apparatus 102, configured to query, according to the identifier of the video terminal, a video surveillance system for a surveillance device list which corresponds to the video terminal; a second receiving apparatus 103, configured to receive the surveillance device list which corresponds to the video terminal and is returned by the video surveillance system, and provide the surveillance device list for the video terminal; and a second sending apparatus 104, configured to obtain, according to selection for the surveillance device by the video terminal, a media stream surveilled by the selected surveillance device from the video surveillance system, and provide the media stream for the video terminal for playing.

Optionally, the first receiving apparatus 101 is further configured to receive a pan/tilt/zoom control request of the video terminal. The first sending apparatus 102 is further configured to parse the pan/tilt/zoom control request to obtain a user operation type, and notify that the video surveillance system performs pan/tilt/zoom control on the selected surveillance device.

Optionally, the second receiving apparatus 103 is further configured to receive an alarm event reported by the video surveillance system. The second sending apparatus 104 is further configured to notify the video terminal of the alarm event via at least one manner of a video call, a voice call or a short message.

Further referring to FIG. 1, in a practical product, the video IVR system of this embodiment includes the following components: a SoftACD which is an access layer device of the video IVR system, provides an access function of a circuit domain video call, and requests a video stream through an interconnection with the video surveillance system; a CTI/IVR which is a service control layer device of the video IVR system, and is in charge of loading and executing a service flow; a service server which is a service application system of the video IVR system, and implements the service logic; an interface server which communicates with the video surveillance system to obtain the surveillance device list and performs pan/tilt/zoom control; a file server which stores voice and video files that are used by the video IVR system; and a database server which stores data related to service execution.

FIG. 1b is a block diagram of functions of the video surveillance system 30 of this embodiment. As shown in FIG. 1b, the video surveillance system 30 includes: a query processing apparatus 301, configured to receive a surveillance device query request which is from the video terminal and is sent by the video IVR system, where a surveillance device list which corresponds to the video terminal is returned to the video terminal via the video IVR system; and a media stream processing apparatus 302, configured to transmit, according to selection for the surveillance device by the video terminal, a media stream surveilled by the selected surveillance device to the video terminal via the video IVR system.

Optionally, as shown in FIG. 1b, the video surveillance system further includes a pan/tilt/zoom control apparatus 303, configured to receive a pan/tilt/zoom control command of the video IVR system, and perform pan/tilt/zoom control on the selected surveillance device.

Optionally, as shown in FIG. 1b, the video surveillance system further includes an alarm apparatus 304, configured to report an alarm event to the video IVR system when the alarm event is detected, receive an alarm event reported by the video surveillance system, and enable the video IVR system to notify the video terminal of the alarm event via at least one manner of a video call, a voice call or a short message.

In the system according to the embodiment of the present invention, through the interconnection between the video IVR platform and the video surveillance platform, the user holding a visual terminal may simply dial a service access code to implement video surveillance and pan/tilt/zoom control through a manner of a circuit domain video call, which enriches access manners of the video surveillance system, reduces requirements of the video surveillance system on a terminal user equipment and the use environment, and meets the needs of a client for video checking and surveillance managing whenever and wherever possible.

In addition, the video surveillance system reports the detected alarm event to the video IVR system, and inherent capabilities such as voice outbound call and video outbound call of the video IVR system are utilized, thereby enriching the alarm notification means of the surveillance system. By use of an existing video plus voice interaction manner of the video IVR system, a threshold for using the system is lowered, and a user group is expanded. The video surveillance browse and pan/tilt/zoom control are implemented by integrating a video IVR technology and the video surveillance system.

### Embodiment 2

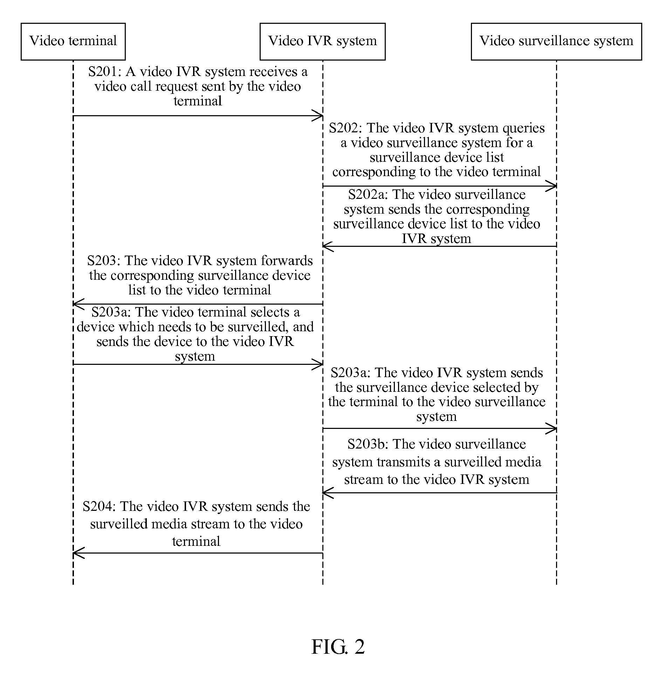

Corresponding to the system of Embodiment 1, this embodiment further provides a video surveillance method based on an interactive voice response IVR technology. FIG. 2 is a signaling flow chart of the method. As shown in FIG. 2, the method includes:

S201: A video IVR system receives a video call request sent by a video terminal, where the video call request includes an identifier of the video terminal and a video call service code.

S202: The video IVR system queries, according to the identifier of the video terminal and the video call service code, a video surveillance system for a surveillance device list which corresponds to the video terminal.

S203: The video IVR system receives the surveillance device list which corresponds to the video terminal and is returned by the video surveillance system, and provides the surveillance device list for the video terminal.

S204: The video IVR system obtains, according to selection for a surveillance device by the video terminal, a media stream surveilled by the selected surveillance device from the video surveillance system, and provides the media stream for the video terminal for playing.

Optionally, as shown in FIG. 2, the method further includes:

S202a: The video surveillance system receives a surveillance device query request which is from the video terminal and is sent by the video IVR system, and sends the surveillance device list which corresponds to the video terminal to the video IVR system.

S203a: The video IVR system sends a device that needs to be surveilled and is selected by the video terminal to the video surveillance system.

S203b: The video surveillance system sends a media stream surveilled by the selected surveillance device to the video IVR system.

Optionally, when the video terminal corresponds to multiple clients (such as multiple enterprises or sites) while each client corresponds to multiple surveillance devices, S202 specifically includes: querying, by the video IVR system, according to the identifier of the video terminal, the video surveillance system for a client list which corresponds to the video terminal; returning, by the video surveillance system, the corresponding client list to the video terminal via the video IVR system; and receiving, by the video IVR system, a specific client selected by the video terminal, and querying the video surveillance system for a surveillance device list which corresponds to the specific client. In other words, one video terminal may correspond to multiple surveillance devices and the video surveillance system may manage these surveillance devices by adopting a manner of dividing the surveillance devices into different levels or groups.

Optionally, in a communication system where the video IVR system and the video surveillance system are located, corresponding authentication may be performed on an identity of a calling user. Generally, the video IVR system and the video surveillance system may be deployed in an inner security network of a carrier, and a new security process may not be added. Further, steps such as authentication and authorization may also be particularly added by the video IVR system and the video surveillance system to further enhance the security, and the step may be implemented by the video IVR system before step 202, and may also be implemented by the video surveillance system before step 203.

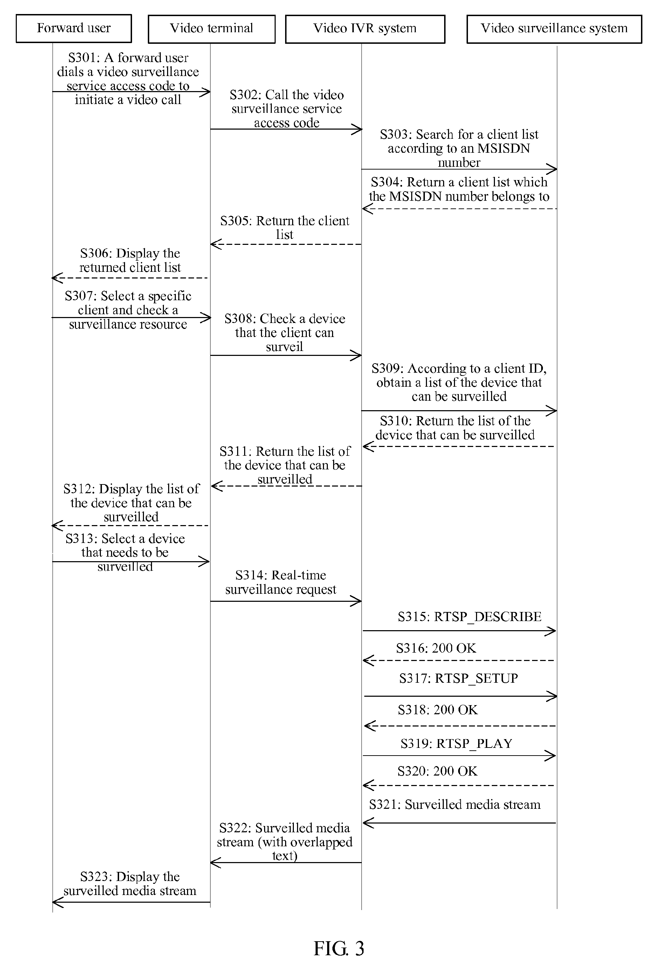

FIG. 3 is a practical signaling flow chart of the video surveillance method based on the interactive voice response IVR technology of this embodiment. As shown in FIG. 3, the method includes:

S301: A forward user holding a video terminal dials a video surveillance service access code.

S302: The video terminal initiates a video call to call the video surveillance service access code, where the video call may be of a circuit domain.

S303: The video IVR system queries, according to an identifier (for example, an MSISDN number) of the video terminal of the call, the video surveillance system for a client list which a calling MSISDN belongs to (one video terminal user may surveil multiple clients, and each client corresponds to multiple video surveillance devices), where the client list includes a client ID and a client name.

S304: The video surveillance system returns the queried client list to the video IVR system.

S305: The video IVR system returns an initial interface of the client list, for example, "for surveillance on Nanjing Research Institute, please press 1; for surveillance on Beijing Research Institute, please press 2", to the video terminal.

S306: The video terminal displays the returned initial interface of the client list to the forward user.

S307: The forward user selects a certain client to check surveillance resource information under the client.

S308: The video terminal sends a request for accessing the surveillance device list to the video IVR system, where the request carries a client ID.

S309: The video IVR system invokes a video surveillance system interface, and according to the selected client ID, obtains a surveillance device list that a user is authorized for access.

S310: The video surveillance system retrieves and returns the surveillance device list that the client is authorized for access, where the surveillance device list is in a local database.

S311: The video IVR system returns an interface displaying the surveillance device list that the client can access, for example, "for Research and Development Center, please press 1; for Production Center, please press 2... ", to a forward user terminal.

S312: The video terminal displays the returned initial interface of the surveillance device list to the forward user.

S313: The forward user selects a device that needs to be surveilled via a video terminal key.

S314: The video terminal sends a real-time video surveillance request to the video IVR system.

S315: The video IVR system receives a key signal sent by the video terminal, according to the key information of the forward user, determines information of a device that the user needs to surveil, and sends an RTSP DESCRIBE command to the video surveillance system, where an RTSP URL carries parameters such as a front end lens device ID (PUID-ChannelNo) and a media stream code (StreamingType).

S316: The video surveillance system returns session description information (200 OK response) to the video IVR system.

S317: The video IVR system sends an RTSP SETUP command to the video surveillance system, where an RTSP URL carries parameters such as PUID-ChannelNo and StreamingType.

S318: The video surveillance system returns a session establishment response (200 OK response) to the video IVR system.

S319: The video IVR system sends an RTSP PLAY command to the video surveillance system, and requests starting to play a real-time video stream, where an RTSP URL carries parameters such as PUID_ChannelNo and StreamingType.

S320: The video surveillance system returns a response (200 OK response) to the video IVR system.

S321: The video surveillance system sends a surveilled media stream to the video IVR system.

S322: After receiving the surveilled media stream, the video IVR system performs processing (including text overlapping processing) on the media stream according to local settings, and sends the new media stream after the processing to the video terminal.

S323: The video terminal displays a surveillance video to the forward user according to the received new media stream.

It should be noted that if the forward user merely corresponds to one industry client, the surveillance device list that the client can access is directly returned in S304, and S305 to S310 may be omitted.

A practical service scenario example shown by the method of this embodiment is that an enterprise A installs three surveillance cameras (in a factory workshop, an office, and a meeting room, respectively) which are interconnected with a video surveillance system of a carrier. A manager of the enterprise is on a business trip, and wants to know the running condition of the enterprise, but cannot access the video surveillance system via a laptop due to the lack of a network environment. In this case, the manager thinks of the manner of a video call, and then he dials a service access code of the video surveillance. The video terminal receives the video call and the service access code of the video surveillance.

And then, the video terminal, the video IVR system, and the video surveillance system proceed to an automatic flow as described in the foregoing, and optionally, the video terminal may play a welcome video according to settings of the system. The serial numbers, names, and operation prompts of the surveillance cameras may be displayed in a list on the video terminal, for example, "please press the key to select: □ factory workshop; □ office; □ meeting room."

After surveillance on the "factory workshop" is selected through the key "1", production images of the factory workshop are finally displayed on the video terminal through the system provided in the embodiment of the present invention.

Interfaces that correspond to the method shown in FIG. 2 and FIG. 3 are defined as follows:
(1) A query interface for the client list and the list of the device that can be surveilled
Bearer protocol: the SOAP
Interface provider: the video surveillance system
Request message format:

| Parameter Name | Data Type | Mandatory | Description |
|---|---|---|---|
| MSISDN | String | M | User's mobile phone number |
| NodeID | String | M | Node ID |
| | | | All zeros when the client list is queried |
| | | | Client ID when the list of the device that can be surveilled is queried |

Response message format:

| Parameter Name | Data Type | Description |
|---|---|---|
| ResultCode | Integer | Result code returned in a result |
| resultDesc | String | Result code description |
| NodeType | Integer | Node type |
| | | 1: client 2: device |
| DataList | Node[] | Returned result list |

Definition of node type:

| Field Name | Field Type | Description |
|---|---|---|
| Nodeld | String | Node ID |
| | | Representing a client ID when the node type is a client |
| | | Representing a device ID when the node type is a device |
| NodeName | String | Node description |
| NodeType | Integer | Node type |
| | | 1: client 2: device |

(2) Real-time browse interface
Bearer protocol: standard RTSP protocol
Interface provider: the video surveillance system
A format of the RTSP URL may be: rtsp://vauIP:port/service?UserId="XXXXXXXX" &PuId-ChannelNo="XXXXXXXX"&PlayMethod=0&StartTime=0&EndTime=0&StreamingType =1

| Attribute Name | Data Type | Mandatory | Description |
|---|---|---|---|
| Userld | String | M | Client ID |
| PuId-ChannelNo | String | M | Front end lens device ID |
| PlayMethod | Integer1 | M | Media playing type: |

| | | | 0: real-time |
|---|---|---|---|
| | | | 1: videotape |
| StartTime | String | O | Playing start time, format: YYYY-MM-DD-HH:MM:SS |
| EndTime | String | O | Playing end time, format: YYYY-MM-DD-HH:MM:SS |
| StreamingType | Integer | M | Media stream code |

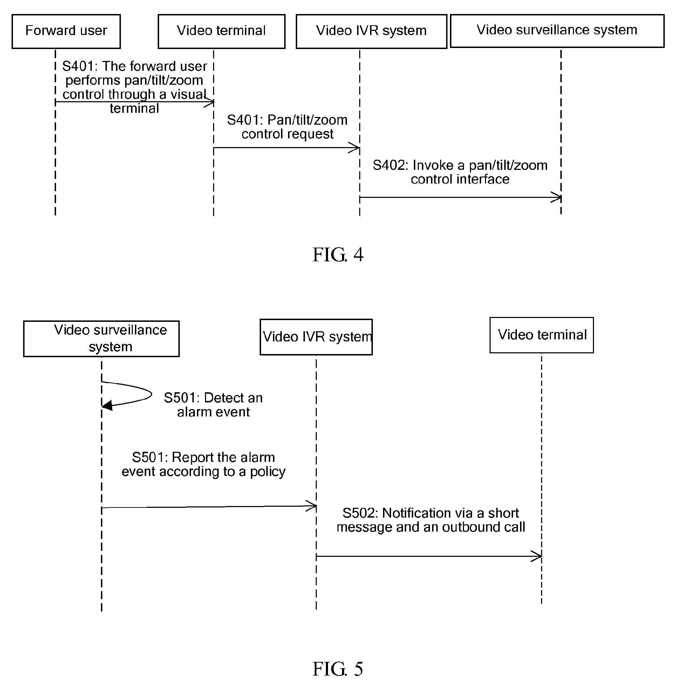

Optionally, the method of this embodiment further supports the user in performing pan/tilt/zoom control on the surveillance video through the video terminal, for example, moving a video image up and down, or to the left and right, and zooming in and zooming out the image. FIG. 4 is a signaling flow chart of the pan/tilt/zoom control. As shown in FIG. 4, the method includes:

S401: The video terminal sends a pan/tilt/zoom control request to the video IVR system according to a pan/tilt/zoom control operation of the user; specifically, the forward user performs the pan/tilt/zoom control operation on a surveilled device through keys of the video terminal, and the video terminal sends the pan/tilt/zoom control request to the video IVR system.

S402: The video IVR system parses the pan/tilt/zoom control request to obtain a user operation type, and notifies that the video surveillance system performs pan/tilt/zoom control on the selected surveillance device; specifically, after receiving a DTMF key signal of the user, the video IVR system determines the operation type of the user according to the key information of the forward user, invokes a pan/tilt/zoom control interface of the video surveillance system, and notifies the video surveillance system of controlling a front end device.

A practical service scenario corresponding to the pan/tilt/zoom control method of this embodiment is that, when browsing a surveillance resource of a surveillance service through the video terminal, the forward user operates a pan/tilt/zoom control shortcut key to initiate a pan/tilt/zoom control operation; after receiving the pan/tilt/zoom control operation, the video IVR system sends a pan/tilt/zoom control request to the video surveillance system, and the video surveillance system sends the pan/tilt/zoom control request to a front end surveillance device, thereby implementing control over the front end surveillance device.

For example, while performing surveillance on the "factory workshop", the manager may control the surveillance device to turn up, down, left and right through keys 2, 8, 4 and 6, zoom in and zoom out an image through keys 1 and 3, and zoom in and zoom out an aperture through keys 7 and 9.

The interface corresponding to the method shown in FIG. 4 is defined as follows:
(3) Pan/tilt/zoom control interface
   Bearer protocol: the UDP
   Interface provider: the video surveillance system
   The format of a request message header may be:

```
          INFO sip:xxx
          Content-Type: application/global_eye_v10+xml
          Content-Length: xxx
          To: xxx
          From: xxx
          CSeq: xxx INFO
          Call-ID: xxx
          Max-Forwards: xxx
          Via: xxx
          Contact: xxx
          The format of a request message body may be:
          <!--PTZ control -->
          <?xml version="1.0" encoding="UTF-8" ?>
          <Message Version="1.0">
          <IE_HEADER MessageType="MSG_PTZ_SET_REQ"
          UserID="client ID" DestID="PUID-ChannelNo"/>
          <IE_PTZ Opld="operation code" Param1="parameter 1" Param2="parameter 2"/>
          </Message>
```

| Attribute Name | Data Type | Mandatory | Description |
|---|---|---|---|
| UserID | String | M | Client ID |
| DestID | String | M | Front end pan/tilt/zoom device ID |
| OpId | Integer | M | Operation Code: |
| | | | 1: turn up (turn up) |
| | | | 2: turn down (turn down) |
| | | | 3: turn left (turn left) |
| | | | 4: turn right (turn right) |
| | | | 5: open iris (open iris) |
| | | | 6: close iris (close iris) |
| | | | 7: zoom in (zoom in) |
| | | | 8: zoom out (zoom out) |
| | | | 9: focus near (focus near) |
| | | | 10: focus far (focus far) |
| Param1 | String | O | Operation parameter 1 |
| Param2 | String | O | Operation parameter 2 |

Optionally, the method of this embodiment further supports the video surveillance system in actively reporting an alarm event when an abnormal situation is detected. FIG. 5 is a signaling flow chart of an alarm method of this embodiment. As shown in FIG. 5, the method includes:

S501: When the alarm event is detected, the video surveillance system reports the alarm event to the video IVR system, where the alarm event is specific contents defined by the video surveillance system, and the specific alarm event may be of multiple types, such as a fire alarm, a traffic jam, a traffic accident or personnel dispute; and the embodiment of the present invention does not limit the specific alarm event. A specific detecting process may be performed by adopting a manner of a combination of software and hardware according to characteristics of the alarm event, and the hardware may be various alarm apparatuses, such as a fire sensor and an automatic alarm, and may also be the alarm event obtained by the video surveillance system through analyzing the collected images and sounds.

When the alarm event is reported in this embodiment, many manners may also be adopted. For example, the alarms are classified into multiple levels, and a general alarm level that can be processed by the video surveillance system is not reported to the video IVR system, while an alarm of a relatively high level, such as a relatively severe fire alarm, is reported to the video IVR system, so that the video IVR system notifies the video terminal in time.

S502: The video IVR system notifies the video terminal of the alarm event via at least one manner of a video call, a voice call or a short message.

A practical service scenario corresponding to the alarm method of this embodiment is that, when occurrence of an alarm is detected, the surveillance front end device sends an alarm message to the video surveillance system; after receiving the alarm message, the video surveillance system sends the alarm message to the video IVR system according to a configured alarm linkage policy (the policy may be determining whether to report the alarm event to the video IVR system according to different alarm levels as described in the foregoing, or may also be another alarm linkage policy, and the embodiment of the present invention does not limit a specific policy); after receiving the alarm message, the video IVR system notifies (for example, an SMS or an Email) the user of the alarm according to the alarm message contents, or performs alarm linkage outbound call processing (that is, a direct outbound call to the video terminal through dialing a phone number of the video terminal).

The interface corresponding to the method shown in FIG. 5 is defined as follows:
(4) Alarm event reporting interface
   Bearer protocol: HTTP + XML
   Interface provider: the Video IVR system
   The format of a message body:

```
          <?xml version="1.0" encoding="UTF-8" ?>
          <Message Version=" 1.0">
          <IE_HEADER MessageType="MSG_ALARM_NOTIFY "/>
          <IE_ALARM_INFO>
          <ActionType></ActionType>
          <Content>
          <AlarmInfo>
          <AlarmType></AlarmType>
          <AlarmName></AlarmName>
          <AlarmTime></AlarmTime>
          <AcceptTime></AcceptTime>
          <AlarmDesc></AlarmDesc>
          </AlarmInfo>
          <Devicelnfo>
          <DeviceId></DeviceId>
          <DeviceName></DeviceName>
          <DeviceLocale></DeviceLocale>
          <Devicelnfo>
          <ActionInfo>
          <InformTextContent></InformTextContent>
          <ExtenedParam></ExtenedParam>
          <PhoneList><!-- a phone number list, mandatory in a short message/voice notification
          -->
          <PhoneNo></PhoneNo>
          </PhoneList>
          <EmailList><!-- an email address list mandatory in an email notification -->
          <EmailAddr</EmailAddr>
          </EmailList>
          </ActionInfo>
          </Content>
          </IE_ALARM_INFO>
          </Message>
```

| Attribute Name | Data Type | Mandatory | Description |
|---|---|---|---|
| ActionType | Integer | | Alarm output type |
| AlarmType | Integer | | Alarm type |
| AlarmName | String | | Alarm type description, corresponding to the |

| | | | alarm type |
|---|---|---|---|
| AlarmTime | String | | Alarm occurring time, the time format: yyyy-mm-dd hh:mi:ss |
| AcceptTime | String | | Alarm receiving time, the time format: yyyy-mm-dd hh:mi:ss |
| AlarmDesc | String | | Alarm description |
| DeviceId | String | | Device ID where an alarm occurs |
| DeviceName | String | | Device name where the alarm occurs |
| DeviceLocale | String | | Device installation position |
| InformTextContent | String | | Text information set in an alarm notification for a user |
| ExtenedParam | String | | Extended information |
| PhoneNo | String | | Phone number, at least one phone number exists in the PhoneList during alarm notification via a short message, or a voice/video outbound call |
| EmailAddr | String | | Email address, at least one email address exists in the EmailList during alarm notification via an Email |

To sum up, in the method of this embodiment, the surveillance video browse may be implemented through a manner of the circuit domain video call, preferentially, the pan/tilt/zoom control of the front end surveillance device may also be implemented through a manner of the mobile phone keys, and preferentially, the voice outbound call, the video outbound call or the short message notification of the alarm event may further be implemented through reporting the alarm event by the video surveillance system.

Through this solution, the user holding the visual terminal may simply dial a service access code to implement the surveillance video browse, and preferentially, the pan/tilt/zoom control may also be implemented, and related personnel are notified of the alarm event reported by the video surveillance system through a manner of a voice outbound call, a video outbound call or a short message. In this way, the applicability of the video surveillance system is improved, the technical performance requirements on the terminal device, the user, and use environment are reduced, and an information feedback function of the video surveillance system is further enhanced.

Persons of ordinary skill in the art may understand that all or a part of the processes of the methods in the foregoing embodiments may be implemented by a computer program instructing relevant hardware. The program may be stored in a computer readable storage medium. When the program runs, the processes of the methods in the foregoing embodiments are performed. The storage medium may be a magnetic disk, a compact disk, a read-only memory (Read-Only Memory, ROM), or a random access memory (Random Access Memory, RAM).

The foregoing embodiments are merely used for describing the technical solutions of the embodiments of the present invention other than limiting the present invention. Although the embodiments of the present invention is described in detail with reference to the foregoing embodiments, persons of ordinary skill in the art should understand that they can still make modifications to the technical solutions recorded in the foregoing embodiments or make equivalent replacements to some technical features in the technical solutions, and these modifications or replacements do not make the essence of the corresponding technical solutions depart from the scope of the technical solutions of the embodiments of the present invention.

## Claims

1. A video surveillance method based on an interactive voice response IVR technology, comprising:
receiving, by a video IVR system, a video call request sent by a video terminal, wherein the video call request comprises an identifier of the video terminal and a video call service code;
querying, by the video IVR system, according to the identifier of the video terminal and the video call service code, a video surveillance system for a surveillance device list which corresponds to the video terminal;
receiving, by the video IVR system, the surveillance device list which corresponds to the video terminal and is returned by the video surveillance system, and providing the surveillance device list for the video terminal; and
according to selection for the surveillance device by the video terminal, obtaining, by the video IVR system, a media stream surveilled by the selected surveillance device from the video surveillance system, and providing the media stream for the video terminal for playing.

2. The method according to claim 1, further comprising:
receiving, by the video surveillance system, a surveillance device query request which is from the video terminal and is sent by the video IVR system, and sending the surveillance device list which corresponds to the video terminal to the video IVR system;
sending, by the video IVR system, a device that needs to be surveilled and is selected by the video terminal to the video surveillance system; and
sending, by the video surveillance system, the media stream surveilled by the selected surveillance device to the video IVR system.

3. The method according to claim 1, wherein the querying, by the video IVR system, according to the identifier of the video terminal and the video call service code, the video surveillance system for the surveillance device list which corresponds to the video terminal comprises:
querying, by the video IVR system, according to the identifier of the video terminal and the video call service code, the video surveillance system for a client list which corresponds to the video terminal;
returning, by the video surveillance system, the client list to the video terminal via the video IVR system; and
receiving, by the video IVR system, a specific client selected by the video terminal, and querying the video surveillance system for a surveillance device list which corresponds to the specific client.

4. The method according to claim 1, further comprising:
receiving, by the video IVR system, a pan/tilt/zoom control request sent by the video terminal; and
parsing, by the video IVR system, the pan/tilt/zoom control request to obtain a user operation type, and notifying the video surveillance system to perform pan/tilt/zoom control on the selected surveillance device.

5. The method according to claim 1, further comprising:
reporting, by the video surveillance system, an alarm event to the video IVR system when the alarm event is detected; and
notifying, by the video IVR system, the video terminal of the alarm event via at least one manner of a video call, a voice call or a short message.

6. A video IVR system, comprising:
a first receiving apparatus, configured to receive a video call request sent by a video terminal, wherein the video call request comprises an identifier of the video terminal and a video surveillance service code;
a first sending apparatus, configured to query, according to the identifier of the video terminal, a video surveillance system for a surveillance device list which corresponds to the video terminal;
a second receiving apparatus, configured to receive the surveillance device list which corresponds to the video terminal and is returned by the video surveillance system, and provide the surveillance device list for the video terminal; and
a second sending apparatus, configured to obtain, according to selection for the surveillance device by the video terminal, a media stream surveilled by the selected surveillance device from the video surveillance system, and provide the media stream for the video terminal for playing.

7. The system according to claim 6, wherein
the first receiving apparatus is further configured to receive a pan/tilt/zoom control request of the video terminal; and
the first sending apparatus is further configured to parse the pan/tilt/zoom control request to obtain a user operation type, and notify the video surveillance system to perform pan/tilt/zoom control on the selected surveillance device.

8. The system according to claim 6, wherein
the second receiving apparatus is further configured to receive an alarm event reported by the video surveillance system; and
the second sending apparatus is further configured to notify the video terminal of the alarm event via at least one manner of a video call, a voice call or a short message.

9. A video surveillance system, comprising:
a query processing apparatus, configured to receive a surveillance device query request which is from a video terminal and is sent by a video IVR system, wherein a surveillance device list which corresponds to the video terminal is returned to the video terminal via the video IVR system; and
a media stream processing apparatus, configured to transmit, according to selection for a surveillance device by the video terminal, a media stream surveilled by the selected surveillance device to the video terminal via the video IVR system.

10. The video surveillance system according to claim 9, further comprising:
a pan/tilt/zoom control apparatus, configured to receive a pan/tilt/zoom control command of the video IVR system, and perform pan/tilt/zoom control on the selected surveillance device.

11. The video surveillance system according to claim 9, further comprising:
an alarm apparatus, configured to report an alarm event to the video IVR system when the alarm event is detected, and enable the video IVR system to notify the video terminal of the alarm event via at least one manner of a video call, a voice call or a short message.

12. A video surveillance system based on an interactive voice response IVR technology, comprising: the video IVR system according to claim 6, 7 or 8, and the video surveillance system which communicates with the video IVR system and is according to claim 9, 10 or 11.
